# FASCICULE DE BREVET EUROPEEN

(11) **EP 1 991 511 B1**
(45) Date de publication et mention de la délivrance du brevet: **12.09.2012**
(21) Numéro de dépôt: 07731696.6
(22) Date de dépôt: 05.03.2007
(51) Int. Cl.: C04B 28/06

(54) **PREPARATION POUR BETON REFRACTAIRE, BETON REFRACTAIRE ET PROCEDE DE FABRICATION**
PRÄPARAT FÜR FEUERFESTEN BETON, FEUERFESTER BETON UND HERSTELLUNGSVERFAHREN DAFÜR
PREPARATION FOR REFRACTORY CONCRETE, REFRACTORY CONCRETE AND METHOD FOR MAKING SAME

(30) Priorité: 07.03.2006 FR 0650789
(43) Date de publication de la demande: 19.11.2008
(73) Titulaire: KERNEOS, 92200 Neuilly-sur-Seine Cedex (FR)
(72) Inventeur: WOHRMEYER, Christoph, 40593 Düsseldorf (DE); SIMONIN, Fabien, 26780 Chateauneuf du Rhone (FR); PARR, Chris, F-78400 Chatou (FR); FRIER, Eric, F-69530 Brignais (FR); BEN YAHIA, Farida, F-69100 Villeurbanne (FR)
(74) Mandataire: Catherine, Alain
(86) Numéro de dépôt international: PCT/FR2007/050879
(87) Numéro de publication internationale: WO 2007/101961

(56) Documents cités:
- EP-A1- 0 464 627
- GB-A- 2 372 038
- US-A1- 2002 192 150
- CÖLLE D ET AL: "Cement-free spinel-based refractory materials" REFRACTORIES AND INDUSTRIAL CERAMICS, vol. 46, no. 4, juillet 2005 (2005-07), pages 256-259, XP002409326
- DATABASE CA [Online] CHEMICAL ABSTRACTS SERVICE, COLUMBUS, OHIO, US; SUGIYAMA, TOMOYUKI ET AL: "Heat-insulating castable refractories" XP002411789 extrait de STN Database accession no. 128:144328 & JP 10 029874 A2 (TOSHIBA CERAMICS CO., LTD., JAPAN) 3 février 1998 (1998-02-03)
- SERRY M A ET AL: "PHASE EVOLUTION AND HYDRAULIC PROPERTIES OF LOW CEMENT CASTABLES MATRIXES" BRITISH CERAMIC TRANSACTIONS, INSTITUTE OF MATERIALS, LONDON, GB, vol. 100, no. 4, 2001, pages 171-176, XP008071575 ISSN: 0967-9782
- OTROJ S ET AL: "The effect of deflocculants on the self-flow characteristics of ultra low-cement castables in Al2O3-SiC-C system" CERAMICS INTERNATIONAL, CERAMURGICA, FAENZA, IT, vol. 31, no. 5, 2005, pages 647-653, XP004828533 ISSN: 0272-8842
- SERRY M A ET AL: "BAUXITE BASED LOW AND ULTRALOW CEMENT CASTABLES" BRITISH CERAMIC TRANSACTIONS, INSTITUTE OF MATERIALS, LONDON, GB, vol. 101, no. 4, 2002, pages 165-168, XP008071592 ISSN: 0967-9782
- DATABASE CA [Online] CHEMICAL ABSTRACTS SERVICE, COLUMBUS, OHIO, US; AIDA, KOJI ET AL: "Non-slump hydraulic transition alumina -bonded castable composition containing low cement and its application without mold" XP002411790 extrait de STN Database accession no. 129:71071 & JP 10 182247 A2 (KUROSAKI REFRACTORIES CO., LTD., JAPAN) 7 juillet 1998 (1998-07-07)
- MA WEIPING ET AL: "Mechanisms of reaction of hydratable aluminas" J AM CERAM SOC; JOURNAL OF THE AMERICAN CERAMIC SOCIETY FEB 1999 AMERICAN CERAMIC SOC, WESTERVILLE, OH, USA, vol. 82, no. 2, février 1999 (1999-02), pages 453-456, XP002411786
- H.HOMMER ET AL: "Studies on a Binder Matrix of Refractory Castables- Influence of Dispersants on Flow Characteristics", CERAMIC NEWS, SPECIAL REFRACTORIES, vol. 6, no. 1, 2002, pages 46-50,
- PARR C ET AL: "Effect of formulation parameters upon the strength development of calcium aluminate cement containing castables", TECHNICAL PAPER - PRESENTED AT THE TARJ REFRACTORY CONFERENCE, OSAKA, JAPAN, 2002 , no. TP-GB-RE-LAF-034 1 January 2002 (2002-01-01), pages 1-12, XP003027997, Retrieved from the Internet: URL:http://www.secar.net/documents/TP_GB_R E_LAF_034.pdf
- PARR ET AL: 'The Design Fundamentals of High Technology Castables - An Understanding for Steelmakers' INTERNATIONAL IRON STEEL CONFERENCE, CHICAGO,USA,1999, [en ligne] 01 Janvier 1999, pages 1 - 15, XP055016783 Extrait de l'Internet: <URL:http://www.secar.net/documents/TP_GB_R E_LAF_022.pdf> [extrait le 2012-01-18]

## Description

La présente invention concerne le domaine des bétons réfractaires, en particulier monolithiques à faible ou très faible teneur en ciment, comprenant de la fumée de silice.

Des bétons réfractaires à basse teneur en ciment sont connus ; de tels bétons comprennent par exemple la composition suivante, exprimée en pourcentage poids par rapport au poids total du béton :
- 80% de granulats 0-6 mm,
- 10% d'alumine fine
- 5% de fumée de silice
- 5 % d'aluminates de calcium;
- 0,1% d'adjuvants, et
- 5 à 6 % d'eau.

La fumée de silice optimise l'empilement granulaire du béton, ce qui permet d'utiliser une faible quantité d'eau et d'améliorer le comportement rhéologique du béton. La fumée de silice contribue ainsi à la réalisation de bétons denses à faible teneur en ciment.

De plus, après mise en place et durcissement, la fumée de silice participe à la formation de phases réfractaires particulières qui permettent, notamment, une bonne résistance à l'abrasion.

Lors de la mise en oeuvre des bétons réfractaires à faible teneur en ciment, on observe une grande variabilité des propriétés des bétons obtenus, en fonction par exemple du type et de la qualité de la fumée de silice ou de l'alumine utilisée.

H. Hommer et al (Ceramic News, Special Refractories, vol.6, no. 1, 2002, pg 46-50) discute l'influence des dispersants sur les caractéristiques de fluidité des bétons réfractaires comprenant la microsilice. L'étude a été réalisé sur les ciments à base d'aluminate de calcium et d'alumine réactive.

C.Parr et al (Kerneos Technical Paper presented at TARJ Refractory Conference, Osaka,Japan,2002) discute l'optimisation des paramètres des bétons réfractaires. L'effet de la surface spécifique de l'alumine sous-calcinée dans le système est montré.

C.Parr et al (Kerneos Technical Paper presented at International Iron Steel Conference, Chicago, USA, 1999) discute les systèmes des bétons réfractaires comprenant la fumée de silice. Une augmentation de la surface B.E.T. de l'alumine induit un maintien d'étalement plus court et une demande en eau élevée.

On observe également une variabilité de l'ouvrabilité des bétons à faible teneur en ciment en fonction de la température de mise en oeuvre.

A titre d'exemple, des bétons réfractaires à faible teneur en ciment, comprenant des phosphates de sodium ou des polyacrylates à titre d'adjuvant ont été mis au point. Ces bétons présentent des variations de caractéristiques selon le type de fumée de silice utilisée, et sont sensibles à la température ambiante de mise en oeuvre du béton.

Ainsi, lorsque le type de fumée de silice ou d'alumine utilisée change, il est souvent nécessaire de faire varier la composition du béton réfractaire, et en particulier la teneur en adjuvants, pour maintenir les propriétés d'usage du béton stables et constantes d'un lot de fabrication à un autre. Cela implique la réalisation de nombreux essais, pouvant s'avérer coûteux. De plus, l'utilisation d'adjuvants permettant d'améliorer la rhéologie, même s'ils apportent une amélioration de la fluidité des bétons, provoquent un retard de durcissement.

Dans certains cas, lorsque la fumée de silice utilisée est de moindre qualité, l'obtention de bétons possédant des propriétés acceptables en terme de durcissement ou de rhéologie est même impossible.

Or, la qualité des fumées de silice disponibles pour la fabrication des bétons réfractaires est très variable, en fonction de leur provenance et de leur mode de fabrication. On trouve ainsi des fumées de silice dont le pH, le taux d'impuretés ou encore la granulométrie varient beaucoup en fonction de la provenance.

Il existe donc un besoin pour de nouveaux bétons réfractaires dont les propriétés d'usage demeurent stables et constantes quel que soit le type de fumée de silice mis en oeuvre pour leur fabrication, et pouvant être appliqués dans une large gamme de température ambiante de mise en oeuvre.

Ces avantages sont désignés par le terme « robustesse » qui définit la capacité du béton à posséder de bonnes propriétés d'usage en terme d'ouvrabilité ou de durcissement par exemple, même lorsque la qualité de certains composants entrant dans leur composition varie ou lorsque leur température ambiante de mise en oeuvre varie.

Le demandeur a mis au point une préparation pour béton réfractaire à faible teneur en ciment comprenant, avant gâchage, en poids par rapport au poids total de ladite préparation :
- 15 à 90 % d'un liant,
   et,
- 10 à 85 % de fumée de silice
   ledit liant comprenant :
- une partie minérale broyée comprenant 30% à 80% en poids, par rapport au poids total de ladite partie minérale broyée, d'un clinker comprenant 60% à 80% en poids d'AI203, et 40% de CaO ou moins,
- au moins un accélérateur de prise,
- au moins un retardateur de prise,
- au moins un agent défloculant,
et caractérisé en ce que ladite partie minérale broyée comprend en outre 20% à 70% en poids, par rapport au poids total de ladite partie minérale broyée, d'une alumine sous calcinée dont la surface spécifique BET est comprise entre 8 m ²/g et 20 m ²/g, et de préférence comprise entre 10 m ²/g et 15 m ²/g, l'alumine sous calcinée comprenant 10 à 50% en poids d'alumine de transition et le complément étant de l'alumine a.

Par "fumée de silice "on entend, au sens de la présente invention, de la silice sous forme de poudre dont les particules ont une taille micrométrique ou nanométrique. La fumée de silice mise en oeuvre peut être une fumée de silice dont la composition chimique répond à la norme européenne "EN 13263 ". La silice mise en oeuvre peut également être de la silice précipitée.

De manière tout à fait préférée, la surface spécifique BET est comprise entre 10 m²/g et 12 m²/g.

Par «température ambiante de mise en oeuvre» on entend au sens de la présente invention la température à laquelle le béton est gâché et coulé.

Le terme «surface spécifique BET» désigne l'aire massique totale externe et interne d'un solide selon la méthode Brunauer, Emmett et Teller (BET). La surface spécifique BET ne mesure pas la porosité fermée. La méthode Brunauer, Emmett et Teller (BET) est décrite dans la norme ISO 9277:1995.

Par «alumine sous calcinée», on entend au sens de la présente invention, de l'alumine obtenue par cuisson, en faisant varier la température et le temps de cuisson, de manière à ce que toute l'alumine ne soit pas transformée en alumine α. Ainsi, lors de la cuisson, l'alumine sous-calcinée est partiellement, mais non complètement transformée en alumine α. L'alumine non transformée en alumine α lors de la cuisson est désignée sous le terme « alumine de transition » dans la suite de la description.

L'alumine sous calcinée du liant de l'invention comprend 10% à 50% en poids d'alumine de transition, le complément étant constitué par de l'alumine α.

Le clinker utilisé comprend les phases minéralogiques : CA, CA2 et éventuellement d'autres phases telles que C12A7 et/ou une alumine.

Une alumine sous calcinée conforme à l'invention peut être obtenue par mélange de plusieurs types d'alumines de surface spécifique BET différentes, à condition que le mélange obtenu présente une surface spécifique BET comprise entre 8 m²/g et 20 m²/g, de préférence comprise entre 10 m²/g et 15 m²/g et, de manière tout à fait préférée, comprise entre 10 m²/g et 12 m²/g.

La préparation mise au point par le demandeur est particulièrement bien adaptée à la réalisation de bétons réfractaires comprenant 2,5% de CaO ou moins. De tels bétons sont désignés sous les termes «bétons à faible teneur en ciment» ou «low cement castable (LCC)».

La préparation mise au point par le demandeur est également particulièrement bien adaptée à la réalisation de bétons réfractaires comprenant 1 % de CaO ou moins. De tels bétons sont désignés sous les termes «bétons à très faible teneur en ciment» ou «ultra low cement castable (ULCC)».

Comme cela ressort de l'exemple 1, la préparation définie ci-dessus permet de réaliser des bétons possédant des propriétés d'usage notamment en terme d'ouvrabilité et de durcissement satisfaisantes et constantes même lorsque le type de fumée de silice utilisée varie.

De même, la préparation définie ci-dessus permet de réaliser des bétons possédant des propriétés satisfaisantes et constantes même lorsque la température ambiante de mise en oeuvre du béton varie. Ainsi, dans l'exemple 2, le demandeur a montré que les écarts de performance en terme d'ouvrabilité et de durcissement des bétons formulés avec la préparation conforme à l'invention, sont réduits quelle que soit la température ambiante de mise en oeuvre du béton.

Enfin, dans l'exemple 3, le demandeur a montré que, lorsque la température ambiante de mise en oeuvre du béton est basse, les bétons formulés avec la préparation conforme à l'invention présentent des écarts de performance en terme d'ouvrabilité et de durcissement réduits même lorsque le type de fumée de silice utilisée varie.

Ainsi, le béton réalisé avec la préparation définie ci-dessus est particulièrement robuste vis-à-vis (i) du type de fumée de silice utilisé, (ii) du type de granulats utilisé, et (iii) de la température ambiante de mise en oeuvre du béton.

La partie minérale broyée entrant dans la composition du liant peut comprendre 40% à 60% en poids, par rapport au poids total de ladite partie minérale broyée, de clinker, et 60% à 40% en poids, par rapport au poids total de ladite partie minérale broyée, d'alumine sous calcinée.

De manière tout à fait préférée, la partie minérale broyée entrant dans la composition du liant comprend 50% en poids, par rapport au poids total de ladite partie minérale broyée, de clinker, et 50% en poids, par rapport au poids total de ladite partie minérale broyée, d'alumine sous calcinée.

De manière tout à fait préférée, l'alumine sous calcinée comprend :
- 80 parties en poids d'alumine α et
- 20 parties en poids d'alumine de transition.

Plusieurs types d'alumines sous calcinées sont adaptées à la réalisation du liant défini ci-dessus. On peut citer par exemple une alumine dont la surface spécifique BET est de 12 m²/g, ou encore une alumine dont la surface spécifique BET est de 9 m²/g.

De préférence, ladite partie minérale broyée présente une surface spécifique Blaine d'au moins 7000 cm²/g.

La préparation objet de l'invention peut comprendre 0,03% à 1% en poids d'accélérateur de prise, par rapport au poids de la partie minérale broyée, et de préférence 0,3 à 0,5% en poids d'accélérateur de prise par rapport au poids de la partie minérale broyée.

Un accélérateur de prise particulièrement adapté à la réalisation du liant est un sel de lithium, en particulier le carbonate de lithium.

La préparation objet de l'invention peut comprendre 0,05% à 1,5% en poids, de retardateur de prise, par rapport au poids de la partie minérale broyée, et de préférence 0,4 à 1,0% en poids, de retardateur de prise, par rapport au poids de la partie minérale broyée.

De préférence, le retardateur de prise est un acide carboxylique, et en particulier l'acide citrique.

La préparation peut comprendre 0,05% à 2% en poids, d'agent défloculant, par rapport au poids de la partie minérale broyée, et de préférence 0,2 à 0,6% en poids, d'agent défloculant, par rapport au poids de la partie minérale broyée.

De préférence, l'agent défloculant est un polyacrylate, un polycarboxylate polyox (PCP), ou un polyphosphate.

Le demandeur a montré dans les exemples 1 à 3 que la préparation définie ci-dessus, comprenant des quantités précises d'accélérateur de prise, de retardateur de prise et d'agent défloculant, est particulièrement résistant au type de fumée de silice utilisé.

L'invention concerne également un béton comprenant, avant gâchage :
- 60 à 90 % en poids de granulats par rapport au poids total du béton,
- 2 à 10%, de préférence 3 à 7%en poids de fumée de silice par rapport au poids total du béton, et
- 2 à 20% d'un liant tel que défini ci-dessus, par rapport au poids total du béton.

De préférence, ledit béton comprend :
- 70 à 90% en poids de granulats par rapport au poids total du béton,
- 2% à 10% en poids de fumée de silice par rapport au poids total du béton, et
- 5 à 15% d'un liant tel que défini ci-dessus, par rapport au poids total du béton.

L'invention a également pour objet un procédé de fabrication d'une préparation pour béton à faible teneur en ciment comprenant de la fumée de silice, ce procedé comprenant la fabrication d'un liant pour béton ledit procédé comprenant les étapes suivantes :
(a) cobroyer une partie minérale comprenant :
   - 30 à 80% en poids d'un clinker comprenant 60% à 80% en poids d'Al₂O₃, et 40% de CaO ou moins, par rapport au poids total dudit mélange et,
   - 20% à 70% en poids, par rapport au poids total dudit mélange, d'une alumine sous calcinée dont la surface spécifique BET est comprise entre 8 m²/g et 20 m²/g, et de préférence comprise entre 10 m²/g et 15 m²/g, de sorte à obtenir une partie minérale broyée, et
(b) mélanger la partie minérale broyée obtenue avec au moins un accélérateur de prise, au moins un retardateur de prise, et au moins un agent défloculant.

La suite de la description se réfère aux tableaux 1 à 5 qui représentent respectivement :
- Tableau 1a : description des différentes alumines utilisées,
- Tableau 1b : description des différentes fumées de silice utilisées,
- Tableau 2 : description des différents types de bétons utilisés, comprenant les différents types d'alumines décrites dans le tableau 1 a,
- Tableau 3: Le tableau 3 illustre les caractéristiques de bétons obtenues à 20°C avec un liant conforme à l'invention, comparées aux caractéristiques de bétons (A) (avec alumine (A)) et différents systèmes d'adjuvantation, ceci pour 4 fumées de silice différentes (FS(V), FS(W), FS(X), et FS(Z)), définies dans le tableau 1 b):
   i) adjuvantation tripolyphosphate de sodium (Na-TPP)
   ii) adjuvantation Castament® FS20 de Degussa (FS20®)
   iii) Darvan 7S® (polyacrylate de sodium, Vanderbuilt) + acide citrique (PA+AC)
- Tableau 4 : Comparaison de la robustesse des bétons conformes à l'invention (bétons (C) et (D)) entre 5°C et 20°C avec deux autres types de bétons ((A) et (B)) de l'art antérieur.
- Tableau 5 : Caractéristiques de différents bétons ((A), (B), (C) et (D)) formulés avec les fumées de silice FS(V) et FS(W), à 5°C.

### EXEMPLES

Dans les exemples 1 à 3, les alumines (A), (B), (C) et (D) définies dans le tableau 1a suivant ont été utilisées :

**Tableau 1a**

| | alumine (A) | alumine (B) | alumine (C) | alumine (D) |
|---|---|---|---|---|
| minéralogie | >98% alumine α | >95% alumine α | 80% alumine α | 80% alumine α |
| état | calcinée | réactive | sous-calcinée | sous-calcinée |
| BET (m²/q) | 0.9 | 7,5 | 9 | 12 |
| d50 (µm) | 4 | 0.5 | | |
| Na₂O total (ppm) | 3700 | 850 | > 2000 | > 2000 |

d50 (µm) : la valeur de d50 est le diamètre de particule exprimé en µm pour lequel il y a 50% en volume de particules dont le diamètre est inférieur à la valeur de d50 indiquée, et donc 50% en volume pour lequel le diamètre est supérieur à cette même valeur de d50.

Une valeur de d50 égale à 4 signifie que 50% en volume des particules ont une taille inférieure à 4 µm.

La distribution de taille de particule de l'alumine est mesurée par granulométrie laser, avec un appareil Coulter LS 230, fonctionnant en voie humide. Le liquide utilisé dans lequel est placé la poudre est l'alcool.

Les alumines (C) et (D) peuvent être utilisées selon l'invention. Les alumines (A) et (B) sont utilisées dans des exemples représentatifs de l'art antérieur.

Dans les exemples 1 à 3, les fumées de silice FS(V), FS(W), FS(X), et FS(Z) définies dans le tableau 1 b suivant ont été utilisées.

**Tableau 1b**

| | | FS (V) | FS (W) | FS (X) | FS (Z) |
|---|---|---|---|---|---|
| C libre | % | 0,49 | 0,84 | 1,34 | 0,09 |
| pH (10%) | | 6,4 | 8,1 | 7,6 | 2,8 |
| SiO₂ | % | 97,36 | 95,93 | 96,78 | 92,62 |
| Al₂O₃ | % | 0,35 | 0,32 | 0,31 | 0,81 |
| Fe₂O₃ | % | 0,06 | 0,04 | 0,55 | 0,32 |
| CaO | % | 0,06 | 0,32 | 0,21 | 0,00 |
| MgO | % | 0,38 | 0,63 | 0,42 | 0,30 |
| TiO₂ | % | 0,03 | 0,04 | 0,04 | 0,06 |
| Mn₂O₃ | % | 0,01 | 0,05 | 0,04 | 0,01 |
| P₂O₅ | % | 0,06 | 0,12 | 0,02 | 0,28 |
| Cr₂O₃ | % | 0,01 | 0,00 | 0,00 | 0,02 |
| ZrO₂ | % | 0,11 | 0,10 | 0,10 | 4,71 |
| K₂O | % | 0,22 | 0,87 | 0,16 | 0,00 |
| PaF 1000°C * | % | 0,90 | 1,71 | 1,75 | 0,87 |
| Eléments solubles (%/matière sèche) | % | 0,32 | 0,53 | 0,25 | 0,09 |

| | | | | | |
|---|---|---|---|---|---|
| * PaF 1000°C signifie « perte au feu à 1000°C ». Les alumines (A), (B), (C) et (D) ont été utilisées pour formuler les bétons de compositions suivantes : | | | | | |

**Tableau 2**

| | Art antérieur | | Invention | |
|---|---|---|---|---|
| Type de béton | Béton (A) | Béton (B) | Béton (C) | Béton (D) |
| Alumine tabulaire T60 6-14 mesh | 29 | 29 | 29 | 29 |
| Alumine tabulaire T60 14-28 mesh | 22 | 22 | 22 | 22 |
| Alumine tabulaire T60 <48 mesh | 29 | 29 | 29 | 29 |
| Alumine (A) | 10 | 5 | 5 | 5 |
| Alumine (B) | | 5 | | |
| Secar® 71 | 5 | 5 | | |
| Liant conforme à l'invention avec alumine (C) | | | 10 | |
| Liant conforme à l'invention avec alumine (D) | | | | 10 |
| Fumées de silice (FS(V), FS(W), FS(X), ou FS(Z)) | 5 | 5 | 5 | 5 |
| eau | + 5.5% | + 5.5% | + 5.5% | + 5.5% |

Pour les bétons A et B les adjuvantations utilisées sont précisées dans les exemples. Pour les bétons C et D, les adjuvants sont ceux du liant conforme à l'invention. Tous les bétons sont formulés à teneur en CaO constante (1.5% CaO).

### Exemple 1

Le tableau 3 ci-dessous illustre les caractéristiques de bétons obtenues à 20°C avec un liant conforme à l'invention, comparées aux caractéristiques de bétons de type (A) (formulés avec alumine (A)) et différents systèmes d'adjuvantation, ceci pour 4 fumées de silice différentes (FS(V), FS(W), FS(X), et FS(Z)):
i) adjuvantation tripolyphosphate de sodium (Na-TPP)
ii) adjuvantation Castament FS20® de la société Degussa (FS20®)
iii) Darvan 7S® (polyacrylate de sodium, Vanderbuilt) + acide citrique (PA +AC)

On observe dans le tableau 3 que les bétons de type (D) formulés avec un liant conforme à l'invention présentent peu de variations d'ouvrabilité quel que soit le type de fumée de silice (FS(V), FS(W), FS(X), et FS(Z)) mis en oeuvre pour leur formulation.

Par comparaison, on observe également que les bétons de type (A), représentatifs de l'art antérieur, ne permettent pas de réaliser des bétons dont l'ouvrabilité reste constante lorsque le type de fumée de silice mis en oeuvre varie, et ceci quel que soit le type d'adjuvantation utilisée.

**Tableau 3**

| | Art antérieur | | | | | | | | | | | | Invention | | | |
|---|---|---|---|---|---|---|---|---|---|---|---|---|---|---|---|---|
| Tests à 20°C | Béton (A) avec Na-TPP (0,15%) | | | | Béton (A) avec FS20® (0,1%) | | | | Béton (A) avec PA (0,1%) + AC (0,02%) | | | | Béton (D) avec liant conforme à l' invention | | | |
| | FS(V) | FS(W) | FS(X) | FS(Z) | FS(V) | FS(W) | FS(X) | FS(Z) | FS(V) | FS(W) | FS(X) | FS(Z) | FS(V) | FS(W) | FS(X) | FS(Z) |
| flow To (mm) | 242 | 202 | 185 | 250 | 260 | 250 | 247 | 260 | 240 | 235 | 170 | 245 | 222 | 203 | 220 | 238 |
| flow T15 (mm) | 214 | 204 | 195 | 252 | 245 | 240 | 240 | 260 | 160 | 225 | 195 | 240 | 228 | 217 | 230 | 235 |
| flow T30 (mm) | 220 | 178 | 205 | 245 | 245 | 235 | 160 | 247 | 215 | 210 | 215 | 237 | 223 | 213 | 217 | 227 |
| flow T60 (mm) | 165 | | | 250 | 210 | 225 | 165 | 235 | 155 | 150 | 140 | 220 | | | | |
| **ouvrabilité (min)** | **78** | **47** | **55** | **100** | **95** | **165** | **80** | **> 240** | **80** | **145** | **80** | **240** | **42** | **41** | **40** | **58** |
| Résistance Flexion 6h (MPa) | 2,8 | 1,9 | 2,0 | 1,4 | 0,4 | 0,3 | 0,3 | 0,0 | 0,5 | 0,4 | 0,3 | 0,0 | 4,1 | 4,0 | 4,0 | 4,0 |
| Résistance compression 6h (MPa) | 13 | 8 | 7 | 5 | 2 | 2 | 1 | 0 | 2 | 2 | 1 | 0 | 12 | 12 | 11 | 12 |
| Résistance Flexion 24h (MPa) | 4,9 | 4,8 | 4,0 | 4,4 | 2,2 | 0,6 | 1,0 | 0,5 | 1,0 | 0,9 | 0,7 | 0,2 | 4,4 | 4,4 | 4,7 | 4,8 |
| Résistance compression 24h (MPa) | 25 | 23 | 17 | 19 | 9 | 3 | 4 | 4 | 3 | 3 | 2 | 1 | 15 | 16 | 14 | 16 |

### Exemple 2

L'exemple 2 illustre la robustesse des bétons conformes à l'invention (bétons (C) et (D)) entre 5°C et 20°C, comparés aux bétons (A) et (B). Pour les quatre types de bétons l'adjuvantation utilisée est la même, c'est à dire celle du liant conforme à l'invention.

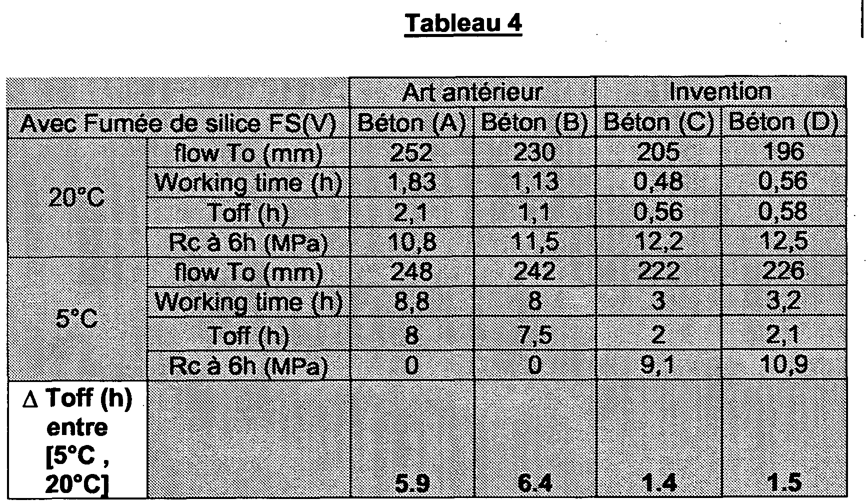

On observe dans le tableau 4, que les écarts de performance en terme d'ouvrabilité et de durcissement des bétons (C) et (D) formulés avec un liant conforme à l'invention, sont faibles, quel que soit la température de mise en oeuvre des bétons, entre 5°C et 20°C.

A l'inverse, les écarts de performance en terme d'ouvrabilité et de durcissement des bétons (A) et (B) formulés avec un liant comprenant respectivement une alumine (A) (BET=0,9 m²/g) ou une alumine (B) (BET=7,5 m²/g) non conformes à l'invention, sont importants lorsque la température de mise en oeuvre varie entre 5°C et 20°C.

Le demandeur a ainsi montré que lorsque la température ambiante de mise en oeuvre du béton varie entre 5°C et 20°C, les bétons (C) et (D), formulés avec un liant conforme à l'invention présentent des écarts de performance en terme d'ouvrabilité et de durcissement réduits même lorsque la température de mise en oeuvre varie.

### Exemple 3

L'exemple 3 illustre les caractéristiques des différents bétons (A), (B), (C) et (D) formulés avec les fumées de silice FS(V) et FS(W), à 5°C, dans lesquels l'adjuvantation utilisée est la même, c'est à dire celle du liant conforme à l'invention.

On observe dans le tableau 5, que les écarts de performance en terme d'ouvrabilité et de durcissement des bétons (C) et (D) formulés avec un liant conforme à l'invention, mis en oeuvre à 5°C, sont faibles, quel que soit le type de fumée de silice, FS(V) ou FS(W), utilisée. A l'inverse, les écarts de performance en terme d'ouvrabilité et de durcissement des bétons (A) et (B) formulés avec un liant comprenant respectivement une alumine (A) (BET=0,9 m²/g) ou une alumine (B) (BET=7,5 m²/g) non conformes à l'invention, mis en oeuvre à 5°C, sont importants lorsque le type de fumée de silice utilisée varie.

Le demandeur a ainsi montré que lorsque la température ambiante de mise en oeuvre du béton est basse (5°C), les bétons (C) et (D), formulés avec un liant conforme à l'invention présentent des écarts de performance en terme d'ouvrabilité et de durcissement réduits même lorsque le type de fumée de silice utilisée varie.

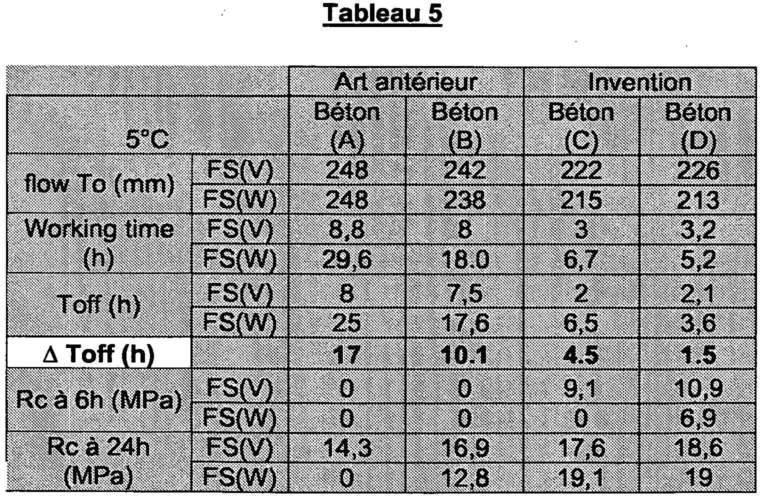

Les paramètres figurant dans les exemples 1 à 3 ont été mesurés selon les modes opératoires décrits ci-après :
flowT0 (mm) : mesure de l'étalement (Flow) selon la norme européenne EN1402-4.

Un moule tronconique de grande base (100 mm), petite base (70 mm) et d'une hauteur de 50mm est rempli de béton. L'étalement du béton est mesuré sur une table vibrante dans les conditions suivantes :
Vibration : amplitude 0,5 mm associée à une fréquence de 50 HZ, pendant 30 secondes).

La valeur de Flow To (mm) correspond au diamètre moyen de la galette de béton au temps initial, juste après malaxage.

La valeur de Flow T15 (mm) correspond au diamètre de la galette de béton après 15 minutes .

Chaque mesure de l'étalement a été effectuée selon le même mode opératoire, en utilisant des masses de bétons identiques, et des temps de passages sur la table vibrante identiques. Ainsi, toutes les valeurs de flowT0 peuvent être comparées entres elles.

### Ouvrabilité (h) ou Working Time :

L'ouvrabilité ou Working Time (WT) correspond à l'ouvrabilité du béton et donc au temps au bout duquel il ne peut plus être mis en place. On estime que ce temps est atteint pour un étalement inférieur à 140mm.

### Toff

La mesure du paramètre Toff est effectuée de la manière suivante :
Le béton est conservé dans un gobelet plastique (250ml), placé dans une boite isolante. On suit l'évolution de la température du béton dans le temps.

Toff (exprimé en heures) correspond au temps au bout duquel la température du béton a augmenté de 1 °C par rapport à sa température initiale (début du pic exothermique).
ΔToff : différence en heures entre 2 valeurs de Toff
Rc : Résistances mécaniques en compression mesurées d'après la norme européenne EN 1402-5.
Rc à 6h : résistance mécanique à la compression à 6 heures.
Rc à 24h : résistance mécanique à la compression à 24 heures.

En compression, les essais sont réalisés sur des éprouvettes prismatiques de dimensions 30mm x 30mm x 160mm. Les éprouvettes sont conservées dans une enceinte à température et hygrométrie contrôlées (100% d'humidité relative et température variable entre 5 et 20°C).

## Revendications

1. Préparation pour béton réfractaire à faible teneur en ciment comprenant, avant gâchage, en poids par rapport au poids total de ladite préparation :
- 15 à 90 % d'un liant,
et,
- 10 à 85 % de fumée de silice
ledit liant comprenant :
- une partie minérale broyée comprenant 30% à 80% en poids, par rapport au poids total de ladite partie minérale broyée, d'un clinker comprenant 60% à 80% en poids d'Al2O3, et 40% de CaO ou moins,
- au moins un accélérateur de prise,
- au moins un retardateur de prise,
- au moins un agent défloculant,
et **caractérisé en ce que** ladite partie minérale broyée comprend en outre 20% à 70% en poids, par rapport au poids total de ladite partie minérale broyée, d'une alumine sous calcinée dont la surface spécifique BET est comprise entre 8 m²/g et 20 m²/g, et de préférence comprise entre 10 m²/g et 15 m²/g, l'alumine sous calcinée comprenant 10 à 50% en poids d'alumine de transition et le complément étant de l'alumine α.

2. Préparation pour béton selon la revendication 1, **caractérisée en ce que** ladite partie minérale broyée présente une surface spécifique Blaine d'au moins 7000 cm²/g_{.}

3. Préparation pour béton selon la revendication 1 ou 2, **caractérisée en ce que** l'accélérateur de prise est un sel de lithium, de préférence le carbonate de lithium.

4. Préparation pour béton selon la revendication 1 ou 2, **caractérisée en ce que** le retardateur de prise est un acide carboxylique, de préférence l'acide citrique.

5. Préparation pour béton selon la revendication 1, **caractérisée en ce que** l'agent défloculant est un polyacrylate, un polycarboxylate polyox (PCP) ou un polyphosphate.

6. Béton comprenant, avant gâchage :
- 60 à 90 % en poids de granulats par rapport au poids total du béton,
- 2 à 10%, de préférence 3 à 7% en poids de fumée de silice par rapport au poids total du béton,
et
- 2 à 20% d'un liant tel que défini dans l'une quelconque des revendications 1 à 5, par rapport au poids total du béton.

7. Procédé de fabrication d'une préparation pour béton à faible teneur en ciment comprenant de la fumée de silice selon l'une quelconque des revendications 1 à 5, ce procédé comprenant la fabrication d'un liant pour béton, ledit procédé comprenant les étapes suivantes :
(a) cobroyer une partie minérale comprenant,
- 30 à 80% en poids d'un clinker par rapport au poids total de ladite partie minérale, ledit clinker comprenant 60% à 80% en poids d'Al2O3, et 40% de CaO ou moins,
- 20% à 70% en poids, par rapport au poids total de ladite partie minérale, d'une alumine sous calcinée dont la surface spécifique BET est comprise entre 8 m²/g et 15 m²/g, et de préférence comprise entre 10 m²/g et 15 m²/g, de sorte à obtenir une partie minérale broyée,
(b) mélanger la partie minérale broyée obtenue avec au moins un accélérateur de prise, au moins un retardateur de prise, et au moins un agent défloculant.

## Claims

1. A preparation for low-cement content concrete comprising, before mixing, by weight based on the total weight of said preparation:
- 15 to 90% of a binder,
and,
- 10 to 85 % of silica fume,
said binder comprising :
- a ground mineral portion comprising 30% to 80% by weight, based on the total weight of said ground mineral portion, a clinker comprising 60% to 80% Al₂O₃ by weight, and 40% or less CaO,
- at least one setting accelerator,
- at least one setting retarder,
- at least one defloculating agent,
and **characterized in that** said ground mineral portion further comprises 20% to 70% by weight, based on the total weight of said ground mineral portion, an under-calcinated alumina whose BET specific surface ranges between 8 m²/g and 20 m²/g, and preferably between 10 m²/g and 15 m²/g, the under-calcinated alumina comprising 10 to 50% transition alumina by weight, the remainder being formed of alumina α.

2. A preparation for concrete according to claim 1, wherein said ground mineral portion exhibits a Blaine specific surface of at least 7000 cm²/g.

3. A preparation for concrete according to claim 1 or 2, wherein the setting accelerator is a lithium salt, preferably lithium carbonate.

4. A preparation for concrete according to claim 1 or 2, wherein the setting retarder is a carboxylic acid, preferably citric acid.

5. A preparation for concrete according to claim 1, wherein the defloculating agent is a polyacrylate, a polycarboxylate polyox (PCP) or a polyphosphate.

6. A concrete comprising, before mixing:
- 60 to 90 % by weight of aggregates based on the total weight of concrete,
- 2 to 10%, preferably 3 to 7% by weight of silica fume based on the total weight of concrete, and
- 2 to 20% of a binder as defined in any one of claims 1 to 5, based on the total weight of concrete.

7. A method for making a preparation for low-cement content concrete comprising silica fume according to any one of claims 1 to 5,
said method comprising the making of a binder for concrete, said method comprising the following steps:
(a) co-grinding a mineral portion comprising,
- 30 to 80% by weight of a clinker based on the total weight of said mineral portion, said clinker comprising 60% to 80% by weight of Al₂O₃, and 40% or less CaO,
- 20% to 70% by weight, based on the total weight of said mineral portion, an under-calcinated alumina whose the BET specific surface ranges between 8 m²/g and 15 m²/g, and preferably between 10 m²/g and 15 m²/g, in order to obtain a ground mineral a portion,
(b) mixing the ground mineral portion obtained with at least one setting accelerator, at least one setting retarder, and at least one defloculating agent.

## Patentansprüche

1. Präparat für feuerfesten Beton mit geringem Zementgehalt, das vor dem Anrühren Folgendes umfasst, in Gew.-%, bezogen auf das Gesamtgewicht des Präparats:
- 15 bis 90% eines Bindemittels; und
- 10 bis 85% pyrogene Kieselsäure;
wobei das Bindemittel Folgendes umfasst:
- einen gemahlenen Mineralanteil, der 30 bis 80 Gew.-% eines linkers umfasst, bezogen auf das Gesamtgewicht des gemahlenen Mineralanteils, der 60 bis 80 Gew.-% Al₂O₃ und 40 Gew.-% oder weniger CaO umfasst;
- wenigstens einen Abbindebeschleuniger;
- wenigstens einen Abbindeverzögerer;
- wenigstens ein Entflockungsmittel;
**dadurch gekennzeichnet, dass** der gemahlene Mineralanteil weiterhin 20 bis 70 Gew.-%, bezogen auf das Gesamtgewicht des gemahlenen Mineralanteils, einer unvollständig kalzinierten Tonerde umfasst, deren spezifische Oberfläche nach BET zwischen 8 m²/g und 20 m²/g liegt und vorzugsweise zwischen 10 m²/g und 15 m²/g liegt, wobei die unvollständig kalzinierte Tonerde 10 bis 50 Gew.-% Übergangsaluminiumoxid umfasst und der Rest aus α-Aluminiumoxid besteht.

2. Präparat für Beton gemäß Anspruch 1, **dadurch gekennzeichnet, dass** der gemahlene Mineralanteil eine spezifische Oberfläche nach Blaine von wenigstens 7000 cm²/g aufweist.

3. Präparat für Beton gemäß Anspruch 1 oder 2, **dadurch gekennzeichnet, dass** der Abbindebeschleuniger ein Lithiumsalz, vorzugsweise Lithiumcarbonat, ist.

4. Präparat für Beton Anspruch 1 der 2, **dadurch gekennzeichnet, dass** der Abbindeverzögerer eine Carbonsäure, vorzugsweise Zitronensäure, ist.

5. Präparat für Beton gemäß Anspruch 1, **dadurch gekennzeichnet, dass** das Entflockungsmittel ein Polyacrylat, ein Polycarboxylat-Polyox (PCP) oder ein Polyphosphat ist.

6. Beton, der vor dem Anrühren Folgendes umfasst:
- 60 bis 90 Gew.-% Granulat, bezogen auf das Gesamtgewicht des Betons;
- 2 bis 10, vorzugsweise 3 bis 7, Gew.-%, pyrogene Kieselsäure, bezogen auf das Gesamtgewicht des Betons; und
2 bis 20 Gew.-% eines Bindemittels, wie es in einem der Ansprüche 1 bis 5 definiert ist, bezogen auf das Gesamtgewicht des Betons.

7. Verfahren zur Herstellung eines Präparats für Beton mit geringem Zementgehalt, der pyrogene Kieselsäure umfasst, gemäß einem der Ansprüche 1 bis 5, wobei das Verfahren die Herstellung eines Bindemittels für Beton umfasst, wobei das Verfahren die folgenden Schritte umfasst:
(a) gemeinsames Vermahlen eines Mineralanteils, umfassend
- 30 bis 80 Gew.-% eines Klinkers, bezogen auf das Gesamtgewicht des Mineralanteils, wobei der Klinker 60 bis 80 Gew.-% Al₂O₃ und 40 Gew.-% oder weniger CaO umfasst;
- 20 bis 70 Gew.-%, bezogen auf das Gesamtgewicht des Mineralanteils, einer unvollständig kalzinierten Tonerde, deren spezifische Oberfläche nach BET zwischen 8 m²/g und 15 m²/g liegt und vorzugsweise zwischen 10 m²/g und 15 m²/g liegt, so dass man einen gemahlenen Mineralanteil erhält;
(b) Mischen des erhaltenen gemahlenen Mineralanteils mit wenigstens einem Abbindebeschleuniger, wenigstens einem Abbindeverzögerer und wenigstens einem Entflockungsmittel.
